# EUROPÄISCHE PATENTSCHRIFT

(11) **EP 0 669 112 B1**
(45) Veröffentlichungstag und Bekanntmachung des Hinweises auf die Patenterteilung: **08.09.1999**
(21) Anmeldenummer: 95100806.9
(22) Anmeldetag: 21.01.1995
(51) Int. Cl.: A61C 8/00

(54) **Dentalimplantat**
Dental Implant
Implant dentaire

(30) Priorität: 23.02.1994 DE 4405797
(43) Veröffentlichungstag der Anmeldung: 30.08.1995
(73) Patentinhaber: Friadent GmbH, 68229 Mannheim (DE)
(72) Erfinder: Vizethum, Freimut, Dr. Ing., D-68723 Schwetzingen (DE); Bergner, Norbert, D-68165 Mannheim (DE)
(74) Vertreter: Klose, Hans, Dipl.-Phys.

(56) Entgegenhaltungen:
- EP-A- 0 323 823
- DE-A- 2 830 025
- US-A- 4 552 532

## Beschreibung

Die Erfindung bezieht sich auf ein Dentalimplantat gemäß den im Oberbegriff des Patentanspruchs 1 angegebenen Merkmalen.

Aus der US-A-45 52 532 ist ein derartiges Dentalimplantat bekannt, welches ein im Kiefer verankerbares Pfostenteil und ein mittels einer Halteschraube verbindbares Aufbauteil enthält. Zwischen dem Aufbauteil und dem Pfostenteil sind elastische Elemente vorgesehen. Das erste elastische Element ist als eine zur Halteschraube koaxiale Hülse ausgebildet und das zweite elastische Element ist in axialer Richtung zwischen dem Aufbauteil und dem Pfostenteil angeordnet. Das Aufbauteil besitzt eine radial außenliegende Ringfläche, wobei zwischen dieser Ringfläche und der axial gegenüberliegenden Stirnfläche ein Ringspalt vorhanden ist, welcher beim Einwirken von Kräften auf eine Krone oder einen Zahnersatz gegen null geht. Ohne Belastung ist dieser Spalt jedoch vorhanden, damit das zweite elastische Element, welches gleichzeitig auch als Dichtring dient, beim Einwirken von Kräften in der gewünschten Weise elastisch deformierbar ist. Der Ringspalt ist jedoch recht nachteilig, da eine mögliche bakterielle Besiedelung zur Schädigung der das Implantat umgebenden Gewebestrukturen führt.

Ferner ist aus der US-A-51 99 873 ein Dentalimplantat bekannt, dessen Aufbauteil für eine Krone oder einen Zahnersatz eine durchgehende Längsbohrung für eine Halteschraube zur Verbindung mit einem Pfostenteil aufweist. Das Pfostenteil besitzt eine koronale Stirnfläche, an welcher eine axial gegenüberliegende Radialfläche eines Aufbauteils anliegt. Es muß Sorge dafür getragen werden, daß zwischen diesen Flächen keine Bakterien nach innen in das Dentalimplantat eindringen können. Zur Rotationssicherung des Aufbauteils bezüglich des Pfostenteils enthalten diese einander zugeordnete Anlageflächen, deren Normalen zumindest eine radialgerichtete Komponente aufweisen. Aufgrund von fertigungsbedingten Toleranzen kann sich in Umfangsrichtung ein gewisses Spiel ergeben, wobei ggf. auch eine Lockerung der Schraubverbindung eintreten kann.

Aus der EP-A-323 823 ist ein Dentalimplantat mit einem komprimierbaren Dichtring in einer Ringnut bekannt, welche in einer mit dem Pfostenteil verbundenen Hülse vorgesehen ist. Ein für die Befestigung einer Suprakonstruktion vorgesehenes Aufbauteil ist mit dem genannten Pfostenteil verbindbar und enthält eine axiale Stirnfläche, an welcher der Dichtring anliegt. Zwischen der axialen Stirnfläche des Aufbauteils und der axial gegenüberliegenden Fläche der Hülse des Primärteils ist ein Ringspalt mit im wesentlichen gleicher Spaltbreite vorhanden. Zur axialen Festlegung des Aufbauteils bezüglich des Pfostenteils weist dieser eine Ausnehmung auf, in welche mittels eines Andruckringes ein O-Ring hineinpreßbar ist. Das Aufbauteil ist mit dem Pfostenteil derart nachgiebig verbunden, daß in axialer Richtung der genannte Ringspalt und ferner in Umfangsrichtung ein zweiter Ringspalt vorhanden ist, um geringfügige Relativbewegungen im Sinne einer natürlichen Zahnbeweglichkeit zu ermöglichen.

Vor allem in dem erstgenannten Ringspalt, welcher zwischen den axial gegenüberliegenden Flächen des Aufbauteils und des Pfostenteils vorhanden ist, können sich Keime oder Bakterien festsetzen. Die Größe des genannten Ringspaltes ist in der Praxis nicht exakt vorgebbar, zumal eine Größe von verschiedenen Fertigungstoleranzen abhängig ist und der erwähnte O-Ring in die genannte Ausnehmung des Pfostenteils hineingepreßt werden muß. Gelangt beim Festziehen der Schraube die axiale Stirnfläche des Aufbauteils an die gegenüberliegende Fläche der Hülse des Pfostenteils, so kann der O-Ring nicht ordnungsgemäß in der Ausnehmung verpreßt werden, wodurch eine feste Verbindung in Frage gestellt ist.

Ein anderes aus der DE-B-28 30 025 bekanntes Dentalimplantat enthält ein Aufbauteil mit einer Kippstütze, welche eine Lippe enthält und an der axial gegenüberliegenden Stirnfläche des Pfostenteils unter Vorspannung anliegt. Das Aufbauteil besteht aus einem hinreichend elastischen Kunststoff, wobei die genannte Lippe einerseits als Kippstütze und andererseits zur Abdichtung bezüglich des Pfostenteils ausgebildet ist. Bei der Dimensionierung und Auslegung der Lippe müssen unterschiedliche Anforderungen berücksichtigt und ein diesbezüglicher Kompromiß muß eingegangen werden. Ferner ist ein vergleichsweise großer, im Querschnitt dreieckförmiger Hohlraum zwischen der Innenseite der genannten Lippe und der axialen Stirnfläche des Pfosten teils vorhanden. Es besteht die Gefahr, daß in diesen Hohlraum im Inneren des Dentalimplantats Bakterien oder Toxine in nachteiliger Weise eindringen und sich dort festsetzen können.

Ferner ist aus der US-A-4 626 214 ein zweiteiliges Dentalimplantat bekannt, bei welchem zwischen dem Aufbauteil und dem im Kiefer verankerbaren Pfostenteil ein O-Ring vorgesehen ist. Dieser O-Ring dient einerseits als Dämpfungselement, damit auf das Aufbauteil einwirkende Kräfte nur gedämpt auf das Pfostenteil und letztendlich die Verbindung des Pfostenteils mit dem Knochen übertragen werden, und andererseits zur Abdichtung. Das Aufbauteil ist mittels eines Stiftes im Pfostenteil axial nachgiebig mit einem weiteren O-Ring befestigt, welcher sowohl in eine Ringnut des Stiftes als auch in einen radialen Einstich in der Aufnahmebohrung des Pfostenteils eingreift. Aufgrund der für die Dämpfung erforderlichen axialen Bewegbarkeit des Aufbauteils besteht die Gefahr, daß Keime oder Bakterien trotz des Dichtringes zwischen Aufbauteil und Pfostenteil in das Innere des Dentalimplantats gelangen.

Der Erfindung liegt daher die Aufgabe zugrunde, das genannte Dentalimplantat dahingehend weiterzubilden, daß eine dichte funktionssichere Verbindung des Aufbauteils mit dem Pfostenteil erreicht wird. Das Eindringen von Bakterien oder Toxinen in das Innere des Dentalimplantats soll zuverlässig für eine lange Lebensdauer von vielen Jahren verhindert werden. Die Übertragung von Axial-und Horizontalkräften soll jedoch in jedem Fall über den im zirkulären Randbereich gelegenen direktem Metall-Metall-Kontakt zwischen Aufbauteil und Implantat erfolgen, um insbesondere infolge Biegebelastung einen Bruch zu vermeiden. Das Dentalimplantat soll die hohen Anforderungen der Praxis erfüllen und eine Lockerung der Verbindung des Aufbauteils mit dem Pfostenteil soll sicher verhindert werden.

Die Lösung dieser Aufgabe erfolgt gemäß den kennzeichnenden Merkmalen des Patentanspruchs 1.

Das vorgeschlagene Dentalimplantat gewährleistet dauerhaft eine bakteriendichte Verbindung des Aufbauteils mit dem Pfostenteil. Der Dichtring wird bei Herstellung der Verbindung um einen vorgebbaren Kompressionsfaktor komprimiert und ist in zweckmäßiger Weise in einem radial innenliegenden ersten Bereich der im wesentlichen axial gegenüberliegenden Flächen des Aufbauteils und des Pfostenteils, bevorzugt in einer Nut angeordnet. Die genannten gegenüberliegenden Flächen des Aufbauteils und des Pfostenteils sind vorzugsweise derart angeordnet, daß ein kleiner radial nach innen zum Dichtring sich öffnender Ringspalt vorhanden ist. Das Aufbauteil und das Pfostenteils liegen nur in einem schmalen radial außenliegenden Ringbereich aneinander an, während im übrigen ein sich zur Längsachse unter einem vorgegebenen kleinen Winkel sich öffnender Spalt vorhanden ist. Hierzu ist zumindest eine der genannten Flächen bezüglich der Längsachse geneigt angeordnet. Auf diese besondere Weise können Fertigungsungenauigkeiten kompensiert werden, so daß die einander gegenüberliegenden Flächen unter Vorspannung entsprechend den Erfordernissen dicht aneinander liegen.

Es ist somit eine doppelte Abdichtung einerseits mittels den einander zugeordneten Flächen des Aufbauteils und des Pfostenteils und andererseits mittels des komprimierten Dichtringes erreicht, so daß dauerhaft eine vakuumdichte Verbindung gewährleistet ist, welche das Eindringen von Bakterien ebenso wie das Eindringen von Toxinen verhindert. Durch die in zweckmäßiger Weise vorgegebene axiale Vorspannkraft werden die im wesentlichen axial einander gegenüberliegenden Flächen radial außen aneinandergepreßt und ferner wird der radial innenliegende Dichtring komprimiert. Es wird eine Funktionsaufteilung zwischen der elastischen Abdichtung mittels des komprimierbaren Dichtringes einerseits und der definierten starren Auflagerung des Aufbauteils bezüglich des Pfostenteils über den radial außenliegenden schmalen Ringbereich erreicht. Die axiale Vorspannung einerseits und die Kompression des Dichtringes andererseits werden in zweckmäßiger Weise unabhängig voneinander definiert vorgegeben. Der radial außenliegende Ringbereich bildet einen definierten Anschlag für die Kompression des Dichtringes, so daß der Kompressionsfaktor im wesentlichen durch die Geometrie der Ringnut, des Dichtringes selbst vorzugsweise in Kombination mit einem Kompressionsmittel, insbesondere in Form eines ringförmigen Vorsprunges vorgebbar ist. Das Pfostenteil und das Aufbauteil bestehen aus vergleichsweise harten Werkstoffen, wie beispielsweise Metall oder Keramik, und weisen somit keine nennenswerten federelastischen Eigenschaften, wie insbesondere der genannte Dichtring auf. Es ist eine vorzugsweie hochvakuumdichte Verbindung geschaffen, wobei als Hochvakuum der Bereich zwischen 10⁻³ bis 10⁻⁷ mbar bezeichnet wird. Bei einer Dichtheitsprüfung mit einem Prüfvakuum von 10⁻³ mbar wurden Leckraten kleiner als 10⁻⁵ mbar x 1 x s⁻¹ gemessen. Die Prüfung erfolgte mit Dentalimplantaten, deren Pfostenteile einen maximalen Außendurchmesser von 6,5 mm und eine Länge von 13 mm aufwiesen, wobei die Verbindung mit dem Aufbauteil mittels einer Halteschraube erfolgte, welche mit einem Anzugsmoment von 18 N.cm eingeschraubt war.

Weiterbildungen und besondere Ausgestaltungen der Erfindung sind in den Unteransprüchen angegeben.

Nachfolgend wird die Erfindung anhand eines in der Zeichnung dargestellten Ausführungsbeispiels näher erläutert. Es zeigen:
- Fig. 1: einen Schnitt des Dentalimplantats in einer Axialebene,
- Fig. 2: vergrößert das Detail II gemäß Fig. 1

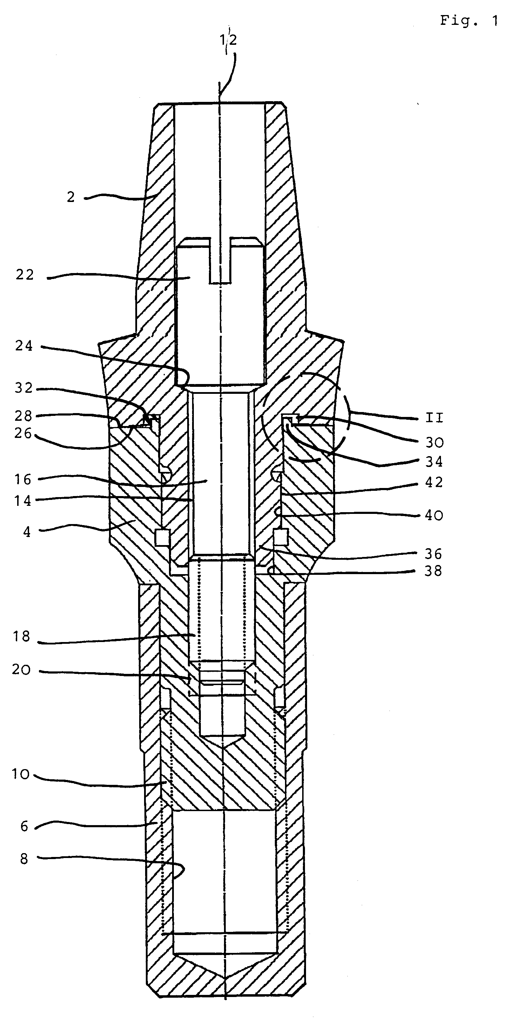

Das zweiteilige Dentalimplantat gemäß Fig. 1 enthält ein Aufbauteil 2 und ein Pfostenteil 4, welche aus vergleichsweise harten und/oder nicht federelastischen Werkstoffen wie Metall oder Keramik bestehen. Das Pfostenteil 4 ist bei dieser Ausführungsform des Dentalimplantats mit einer Hülse 6 verbunden. Die Hülse 6 enthält eine Sackbohrung 8 mit einem Innengewinde, in welches das Pfostenteil mit einem Außengewinde 10 eingeschraubt ist. Das Pfostenteil 4 und die Hülse 6 können bedarfsweise auch ein einziges integral miteinander verbundenes Bauteil bilden. Das Aufbauteil 2 besitzt eine zur Längsachse 12 koaxiale Durchgangsbohrung 14, durch welche eine Halteschraube 16 geführt ist. Die Halteschraube 16 ist mit ihrem Gewinde 18 in ein Innengewinde 20 des Pfostenteils 4 eingeschraubt und liegt mit ihrem Kopf 22 an einer Ringschulter 24 des Aufbauteils 2 an.

Das Aufbauteil 2 weist eine im wesentlichen axiale Ringfläche 26 auf, während das Pfostenteil 4 eine gegenüberliegende koronale Stirnfläche 28 aufweist. Diese zugeordneten Flächen 26, 28 liegen bei festgezogener Halteschraube 16 unter Vorspannung zumindest teilweise aneinander an. Radial innen weist das Aufbauteil 2 anschließend an die Ringfläche 26 eine Ringnut 30 mit einem Silikon-Dichtring 32 auf, welcher aus Gründen der Übersicht nur im linken Teil der Zeichnung dargestellt ist. Dem Dichtring 32 sind Kompressionsmittel zugeordnet, um einen Kompressionsfaktor für den Dichtring 2 definiert vorzugeben. In der dargestellten Ausführungsform besitzt das Pfostenteil 4 einen der Ringnut 30 zugeordneten Vorsprung 34. Dieser Vorsprung 34 steht über die koronale Stirnfläche 28 des Pfostenteils 4 axial vor, greift in die Ringnut 30 ein und komprimiert den dort angeordneten Dichtring 32. Es ist somit eine hochvakuumdichte Verbindung zwischen dem Aufbauteil 2 und dem Pfostenteil 4 funktionssicher gewährleistet. Wesentlich ist insoweit, daß eine exakte axiale Fixierung des Aufbauteils 2 bezüglich des Pfostenteils 4 über die Ringfläche 26 und die Stirnfläche 28 vorgegeben ist, wobei eine definierte axiale Vorspannung beim Festziehen der Halteschraube 16 vorgegeben wird.

In einer alternativen hier nicht weiter dargestellten Ausführungsform kann das Kompressionsmittel anstelle des erläuterten axialen Vorsprunges beispielsweise als ein separater Ring ausgebildet sein, der entsprechend dem Vorsprung 34 ausgebildet ist, an der im wesentlichen Ebenen koronalen Ringfläche 28 anliegt und in die Ringnut mit hineingepreßt werden kann. Die Kompressionsmittel können ferner durch entsprechende Dimensionierung und/oder Formgebung der Ringnut 30 und/oder der gegenüberliegenden Fläche des Aufbauteils vorgegeben sein. Auch kann im Rahmen dieser Erfindung die Ringnut im Pfostenteil vorgesehen sein, wobei entsprechend dem Aufbauteil die Kompressionsmittel zugeordnet sind. Unabhängig von der jeweiligen Ausgestaltung ist es wesentlich, daß radial innenliegend der komprimierte Dichtring vorhanden ist, während radial außen die Ringfläche und die Stirnfläche insbesondere in einem schmalen äußeren Ringbereich unter Vorspannung dicht aneinander liegen. Der Kraftfluß erfolgt im wesentlichen über den äußeren Ringbereich.

Das Aufbauteil 2 greift mit einem Ansatz 36 in die Ausnehmung 38 des Pfostenteils 4 ein. In der Ausnehmung 38 sind Anlageflächen 40 in Form eines Sechskants angeordnet und entsprechende Sechskant-Anlageflächen 42 besitzt der Ansatz 36. Die einander zugeordneten Anlageflächen 40, 42 verlaufen im wesentlichen parallel zur Längsachse 12 und dienen zur Rotationssicherung des Aufbauteils 2 bezüglich des Pfostenteils 4. Es sei festgehalten, daß anstelle der Sechskantflächen grundsätzlich nur ein Paar derartiger Anlageflächen ausreichen wurde, deren Normalen zumindest eine in radiale Richtung weisende Komponente aufweisen, um so die Rotationssicherung zu ermöglichen. Aufgrund von fertigungsbedingten Toleranzen ist ein mehr oder weniger großes Spiel zwischen den Anlageflächen 40 und 42 in Umfangsrichtung vorhanden, welches nach dem Anziehen der Halteschraube 16 praktisch verschwindet. Unter dynamischer Belastung beim Kauen kommt es jedoch im Bereich der Rotationssicherung zu Mikrobewegungen, da die Implantat-Aufbau-Paarung über ein Toleranzfeld verbunden ist. Dies führt zur Schraubenlockerung und Fraktur. Gleichwohl besteht das Problem einer Rotation und des Bruches des Dentalimplantats, insbesondere dessen Halteschraube. Mittels des zusammengepreßten Dichtringes wird die Friktion zwischen Aufbauteil 2 und Pfostenteil 4 erheblich erhöht. Mittels des komprimierten Dichtringes wird eine wesentlich verbesserte Bremswirkung gewährleistet und die Bruchgefahr reduziert.

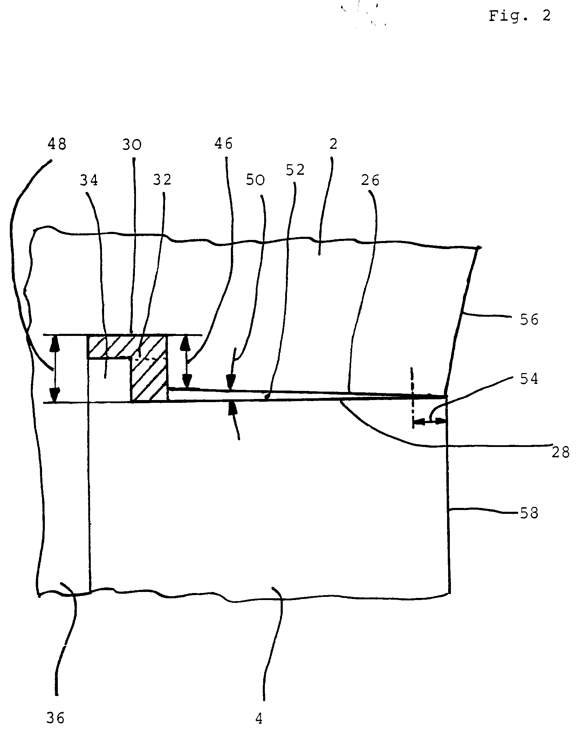

Fig. 2 zeigt vergrößert das Detail II mit der den komprimierten Silikon-Dichtring 32 enthaltenden Ringnut 30 des Aufbauteils 2. Vor dem Einsetzen des Aufbauteils 2 in das Pfostenteil 4 weist der Dichtring 32 eine axiale Länge 48 auf, welche zweckmäßig um einen vorgegebenen Betrag größer ist als die axiale Tiefe 46 der Ringnut 30. Desweiteren ist vor dem Einsetzen die radiale Breite des Silikon-Dichtringes 32 größer als die Breite der Ringnut 30. Beim Verspannen des Aufbauteils 2 mit dem Pfostenteils 4 mittels der Halteschraube erfolgt eine Kompression des Dichtringes 32, und zwar vor allem mittels des in die Ringnut 30 hineinragenden Vorsprunges 34 des Pfostenteils 4. Da die Ringnut 30 radial innenliegend bezüglich der Ringfläche 26 angeordnet ist und zudem der Ansatz 36 dort vorhanden ist, wird der recht kleine Dichtring 32 vor dem Zusammenbau des Aufbauteils 2 mit dem Pfostenteil 4 zuverlässig in der Ringnut 30 gehalten. Wie bereits dargelegt, weist der Dichtring 32 gegenüber der Ringnut 30 ein Übermaß auf, welches eine funktionssichere Festlegung in der Ringnut 30 vor dem Zusammenbau gewährleistet. Ferner wird aufgrund des Übermaßes im Zusammenwirken mit dem ringförmigen Vorsprung 34 der Kompressionsfaktor des Dichtringes 32 definiert vorgegeben. Dieser Kompressionsfaktor, also Querschnittsfläche des Dichtringes 32 im komprimierten Zustand bezogen auf die Querschnittsfläche im entspannten Zustand, ist in zweckmäßiger Weise kleiner als 0,9, liegt bevorzugt im Bereich zwischen 0,7 und 0,9, wobei ein Wert von 0,8 sich als zweckmäßig erwiesen hat.

Die Stirnfläche 28 des Pfostenteils 4 ist in einer Radialebene des Dentalimplantats angeordnet, steht also orthogonal zur Längsachse. Hingegen ist die gegenüberliegende Ringfläche 26 des Aufbauteils 2 bezüglich der Längsachse geneigt angeordnet, so daß zur Stirnfläche 28 des Pfostenteils 4 ein in einem vorgegebenen Winkel 50 sich öffnender Ringspalt 52 vorhanden ist. Der Winkel 50 liegt in zweckmäßiger Weise zwischen 3 und 7 Grad und ist bevorzugt im wesentlichen 5 Grad groß. Die Ringfläche 26 und die Stirnfläche 28 liegen somit nur über einen Bruchteil ihrer jeweiligen Gesamtfläche aneinander an. Die dichte Anlage von Ringfläche 26 und Stirnfläche 28 erfolgt in einem radial außenliegenumlaufenden Bereich 54, welcher an die zur Längsachse koaxialen Außenflächen 56 und 58 des Aufbauteils 2 bzw. des Pfostenteils 4 unmittelbar anschließt. Im radial außenliegenden Anlagebereich 54, welcher wesentlich kleiner ist als die Ringfläche 26, ist eine vergleichsweise große Flächenpressung vorhanden, ohne daß hierfür mittels der Halteschraube große axiale Kräfte und/oder Drehmomente bei Herstellung der Verbindung zwischen dem Aufbauteils 2 und dem Pfostenteil 4 aufgebracht werden müssen. Rundum bezüglich der Längsachse ist eine quasi linienartige Berührung am radial äußeren Rand des Aufbauteils 2 und des Pfostenteils 4 vorgegeben, wodurch Unregelmäßigkeiten oder Fertigungsungenauigkeiten in der Ringfläche 26 und der koronalen Stirnfläche 28 ausgeglichen werden. Dadurch wird eine funktionssichere und im hohen Maße dichte Verbindung zwischen dem Aufbauteils und dem Pfostenteil 4 gewährleistet. Wesentlich ist, daß ausgehend von dem radial außenliegenden Anlagebereich 54 zwischen der Ringfläche 26 und der Stirnfläche 28 der Ringspalt 52 vorhanden ist, der sich radial nach innen zur Ringnut 30 mit dem Dichtring 32 zweckmäßig öffnet. Es versteht sich, daß im Rahmen der Erfindung zusätzlich oder alternativ auch die Stirnfläche 28 in der erforderlichen Weise geneigt angeordnet sein kann.

### Bezugszeichen

- 2: Aufbauteil
- 4: Pfostenteil
- 6: Hülse
- 8: Sackbohrung
- 10: Außengewinde von 4
- 12: Längsachse
- 14: Durchgangsbohrung in 2
- 16: Halteschraube
- 18: Gewinde von 16
- 20: Innengewinde von 4
- 22: Kopf von 16
- 24: Ringschulter in 2
- 26: Ringfläche von 2
- 28: koronale Stirnfläche von 4
- 30: Ringnut
- 32: Silikon-Dichtring
- 34: ringförmiger Vorsprung
- 36: Ansatz an 2
- 38: Ausnehmung in 4
- 40: Sechskant-Anlagefläche in 38
- 42: Sechskant-Anlagefläche an 36
- 46: axiale Tiefe von 30
- 48: axiale Länge von 32
- 50: Winkel
- 52: Ringspalt
- 54: Anlagebereich
- 56,58: Außenfläche

## Patentansprüche

1. Dentalimplantat mit einem im Kiefer verankerbaren Pfostenteil (4) und einem mit diesem insbesondere mittels einer Halteschraube (16) verbindbaren Aufbauteil (2), wobei das Aufbauteil (2) mittels einer Ringfläche (26) an einer im wesentlichen axial gegenüberliegenden Stirnfläche (28) des Pfostenteils (4) zur Anlage bringbar ist und wobei in einer Ringnut (30) zwischen dem Aufbauteil (2) und der Stirnfläche (28), des Pfostenteils (4) ein Dichtring (32) vorgesehen ist, dadurch gekennzeichnet, daß im montierten Zustand die Ringfläche (26) und die Stirnfläche (28) nur in einem radial außenliegenden Anlagebereich (54) rundherum unter Vorspannung aneinander liegen, und daß in einem Bereich radial zwischen der radial innenliegenden Ringnut (30) mit dem Dichtring (32) und dem Anlagebereich (54) ein Ringspalt (52) zwischen der Ringfläche (26) und der Stirnfläche (28) vorhanden ist, in dem die Ringfläche (26) und die Stirnfläche (28) nicht aneinander liegen.

2. Dentalimplantat nach Anspruch 1, dadurch gekennzeichnet, daß zwischen der Ringfläche (26) und der Stirnfläche (28) ein zur Längsachse (12) sich öffnender Winkel (50) vorhanden ist.

3. Dentalimplantat, insbesondere nach Anspruch 1 oder 2, dadurch gekennzeichnet, daß dem Dichtring (32) Kompressionsmittel zugeordnet sind, mittels welchen der Dichtring (32) um einen vorgebbaren Kompressionsfaktor komprimiert ist.

4. Dentalimplantat nach Anspruch 3, dadurch gekennzeichnet, daß die Kompressionsmittel einen ringförmigen Vorsprung (34) aufweisen, welcher insbesondere in die Ringnut (30) hineinragt.

5. Dentalimplantat nach einem der Ansprüche 1 bis 4, dadurch gekennzeichnet, daß der Dichtring (32) um einen Kompressionsfaktor zwischen 0,7 und 0,9, bevorzugt im Bereich von 0,8, komprimiert ist.

6. Dentalimplantat nach einem der Ansprüche 1 bis 5, dadurch gekennzeichnet, daß der Dichtring (32) aus einem komprimierbaren Werkstoff, insbesondere Silikon, besteht.

7. Dentalimplantat nach einem der Ansprüche 2 bis 6, dadurch gekennzeichnet, daß der sich radial nach innen öffnende Winkel (52) zwischen der Ringfläche (26) und der Stirnfläche (28) zwischen 3 und 6 Winkelgraden, bevorzugt im wesentlichen 5 Winkelgrade groß ist.

8. Dentalimplantat nach einem der Ansprüche 1 bis 7, dadurch gekennzeichnet, daß der radial äußere Anlagebereich (54) unmittelbar an die Außenflächen (56, 58) des Aufbauteils (2) und/oder des Pfostenteils (4) in radialer Richtung nach innen zur Längsachse (12) anschließt.

9. Dentalimplantat nach einem der Ansprüche 1 bis 8, dadurch gekennzeichnet, daß das Aufbauteil (2) bezüglich des Pfostenteils (4) mittels einander gegenüberliegenden Anlageflächen (40, 42), deren Normale vorzugsweise eine radiale Komponente aufweisen, gegen Rotation gesichert ist, wobei mittels des Dichtringes (32) eine Bremswirkung vorgegeben wird, welche zusätzlich einer Rotation zwischen dem Aufbauteil (2) und dem Pfostenteil (4) entgegenwirkt.

## Claims

1. A dental implant having a post part (4) which may be anchored in the jaw and a mounting part (2) which may be connected to said post part in particular by means of a retaining screw (16), it being possible to bring the mounting part (2) to bear against a substantially axially opposing end face (28) of the post part (4) by means of an annular face (26), and a sealing ring (32) being provided in an annular groove (30) between the mounting part (2) and the end face (28) of the support part (4), characterized in that, in the assembled condition, the annuler face (26) and the end face (28) abut against one another under pre-tension only around a radially outer contact region (54), and in that in a region radially between the radially inner annular groove (30) having the sealing ring (32) and the contact region (54) there is an annular gap (52) between the annular face (26) and the end face (28), in which the annular face (26) and the end face (28) do not abut against one another.

2. A dental implant according to Claim 1, characterized in that between the annular face (26) and the end face (28) there is an angle (50) which opens towards the longitudinal axis (12).

3. A dental implant, in particular according to Claim 1 or 2, characterized in that compression means are associated with the sealing ring (32) and compress the sealing ring (32) by a predetermined compression factor.

4. A dental implant according to Claim 3, characterized in that the compression means have an annular projection (34) which projects in particular into the annular groove (30).

5. A dental implant according to one of Claims 1 to 4, characterized in that the sealing ring (32) is compressed by a compression factor between 0.7 and 0.9, preferably in the range of 0.8.

6. A dental implant according to one of Claims 1 to 5, characterized in that the sealing ring (32) consists of a compressible material, in particular silicone.

7. A dental implant according to one of Claims 2 to 6, characterized in that the dimension of the radially inwardly opening angle (52) between the annular face (26) and the end face (28) is between 3 and 6 degrees, preferably substantially 5 degrees.

8. A dental implant according to one of Claims 1 to 7, characterized in that the radially outer contact region (54) is immediately adjacent to the outer faces (56, 58) of the mounting part (2) and/or the post part (4) in the radial direction in towards the longitudinal axis (12).

9. A dental implant according to one of Claims 1 to 8, characterized in that mutually opposing contact faces (40, 42) whereof the normals preferably have a radial component prevent the mounting part (2) from rotating with respect to the post part (4), the sealing ring (32) providing a braking effect which additionally counteracts rotation between the mounting part (2) and the post part (4).

## Revendications

1. Implant dentaire avec une partie de soutien (4) ancrée dans la mâchoire et une partie rapportée (2) pouvant être assemblée à celle-ci en particulier au moyen d'une vis de fixation (16), la partie rapportée (2) pouvant être mise en appui au moyen d'une surface annulaire (26) contre une surface frontale (28) sensiblement opposée axialement de la partie de soutien (4) et une bague d'étanchéité (32) étant prévue dans une rainure annulaire (30) entre la partie rapportée (2) et la surface frontale (28) de la partie de soutien (4), ***caractérisé en ce qu***'à l'état monté, la surface annulaire (26) et la surface frontale (28) ne s'appuient l'une contre l'autre sur leur pourtour sous précontrainte que dans une zone d'appui (54) extérieure radialement, et ***en ce que***, dans une zone comprise radialement entre la rainure annulaire (30) intérieure radialement avec la bague d'étanchéité (32) et la zone d'appui (54), se trouve une fente annulaire (52) entre la surface annulaire (26) et la surface frontale (28), dans laquelle la surface annulaire (26) et la surface frontale (28) s'appuient de manière étanche l'une contre l'autre.

2. Implant dentaire selon la Revendication 1, ***caractérisé en ce qu***'entre la surface annulaire (26) et la surface frontale (28) est présent un angle (50) s'ouvrant en direction de l'axe longitudinal (12).

3. Implant dentaire selon la Revendication 1 ou 2**, *caractérisé en ce qu***'à la bague d'étanchéité (32) sont associés des moyens de compression au moyen desquels la bague d'étanchéité (32) peut être comprimée d'un facteur de compression imposable.

4. Implant dentaire selon la Revendication 3, ***caractérisé en ce que*** les moyens de compression présentent une saillie annulaire (34) qui forme saillie en particulier dans la rainure annulaire (30).

5. Implant dentaire selon l'une quelconque des Revendications 1 à 4, ***caractérisé en ce que*** la bague d'étanchéité (32) est comprimée d'un facteur de compression compris entre 0,7 et 0,9, de préférence de l'ordre de 0,8.

6. Implant dentaire selon l'une quelconque des Revendications 1 à 5, ***caractérisé en ce que*** la bague d'étanchéité (32) se compose d'un matériau compressible, en particulier de la silicone.

7. Implant dentaire selon l'une quelconque des Revendications 2 à 6, ***caractérisé en ce que*** l'angle (50) s'ouvrant radialement vers l'intérieur entre la surface annulaire (26) et la surface frontale (28) vaut entre 3 et 6 degrés d'angle, de préférence sensiblement 5 degrés d'angle.

8. Implant dentaire selon l'une quelconque des Revendications 1 à 7, ***caractérisé en ce que*** la zone d'appui radialement extérieure (54) fait directement suite aux surfaces extérieures (56, 58) de la partie rapportée (2) et/ou de la partie de soutien (4) dans la direction radiale vers l'intérieur en direction de l'axe longitudinal (12).

9. Implant dentaire selon l'une quelconque des Revendications 1 à 8, ***caractérisé en ce que*** la partie rapportée (2) est immobilisée en rotation par rapport à la partie de soutien (4) au moyen de surfaces d'appui mutuellement opposées (40, 42), dont les normales présentent de préférence une composante radiale, la bague d'étanchéité (32) permettant d'imposer un effet de freinage qui s'oppose en plus à une rotation entre la partie rapportée (2) et la partie de soutien (4).
